# EUROPÄISCHE PATENTSCHRIFT

(11) **EP 3 084 950 B1**
(45) Veröffentlichungstag und Bekanntmachung des Hinweises auf die Patenterteilung: **03.11.2021**
(21) Anmeldenummer: 14795842.5
(22) Anmeldetag: 11.11.2014
(51) Int. Cl.: H02M 3/158, H02H 7/122, H02M 1/088, H02H 7/08, H02M 1/32

(54) **SCHALTUNGSANORDNUNG FÜR EINEN NOTLAUF EINES MEHRPHASIGEN SPANNUNGSWANDLERS MITTELS SPEZIELLEN BETRIEBSVERFAHREN**
CIRCUIT ARRANGEMENT FOR EMERGENCY OPERATION OF A MULTIPHASE VOLTAGE CONVERTER BY MEANS OF SPECIAL OPERATING METHODS
AGENCEMENT DE CIRCUIT POUR LE FONCTIONNEMENT D'URGENCE D'UN CONVERTISSEUR DE TENSION POLYPHASÉ À L'AIDE D'UN PROCÉDÉ DE FONCTIONNEMENT SPÉCIAL

(30) Priorität: 20.12.2013 DE 102013226795
(43) Veröffentlichungstag der Anmeldung: 26.10.2016
(73) Patentinhaber: Robert Bosch GmbH, 70442 Stuttgart (DE)
(72) Erfinder: DRAESE, Nils, 70469 Feuerbach (DE); SCHINZEL, Mirko, 70378 Stuttgart (DE)
(86) Internationale Anmeldenummer: PCT/EP2014/074273
(87) Internationale Veröffentlichungsnummer: WO 2015/090735

(56) Entgegenhaltungen:
- EP-A2- 0 431 492
- WO-A1-2013/139373
- None

## Beschreibung

### Stand der Technik

Die Erfindung geht aus von einer Schaltungsanordnung mit einem Spannungswandler mit einem Eingangspfad, einem Ausgangspfad und mit mehreren Phasen, wobei jede Phase mindestens eine Halbbrücke und mindestens eine Sicherung aufweist, wobei je ein Zweig der Halbbrücke einen MOSFET aufweist.

Die Erfindung betrifft außerdem ein Verfahren zum Betrieb einer solchen Schaltungsanordnung.

Eine solche Schaltungsanordnung ist beispielsweise in der Patentschrift US 5499186 A oder EP0431492 A2 offenbart, wobei die Schaltungsanordnung aus dieser Patentschrift wenigstens zwei Halbbrücken pro Phase offenbart.

In Spannungswandlern werden Halbbrücken aus Schaltern in Verbindung mit einer Spule und einem Kondensator genutzt, um eine Spannung in eine andere Spannung umzuwandeln. Indem mehrere Phasen parallel geschaltet und zeitlich versetzt angesteuert werden, wird erreicht, dass die Bauteile weniger belastet und zusätzlich der Rippelstrom deutlich verringert werden. Zudem erhöht sich dadurch die elektromagnetische Verträglichkeit und es treten weniger Verluste auf, wodurch der Wirkungsgrad verbessert wird. Als Schalter dienen hierbei meist MOSFETs, welche bei einem Fehlerfall in der Regel mit einem Kurzschluss ausfallen. Bei einem Spannungswandler mit mehreren parallel geschalteten Phasen hat der Ausfall einer Phase den Ausfall des gesamten Wandlers zur Folge.

### Aufgabe

Die Aufgabe der Erfindung besteht darin, einen Notlauf für einen mehrphasigen Spannungswandler zu ermöglichen, welcher durch einen Kurzschluss eines MOSFETs ausfällt.

### Offenbarung der Erfindung

### Vorteile der Erfindung

Die Erfindung geht aus von einer Schaltungsanordnung mit einem Spannungswandler gemäß Anspruch 1. Dadurch kann dann der Spannungswandler in einem Notlauf betrieben werden.

Ein zusätzlicher Kern der Erfindung besteht darin, dass in jedem Zweig der Halbbrücke eine Sicherung angeordnet ist. Vorteilhaft ist hierbei, dass die Sicherungen durch ihren Eigenwiderstand eine Art resistive Symmetrierung der einzelnen Halbbrücken darstellen. Zudem wird dadurch der sogenannte Freibrennfaktor, also das Verhältnis zwischen verfügbarem Strom in der Phase mit dem defekten MOSFET und tolerierbarem Nominalstrom, erhöht. Hierdurch können die Sicherungen auf einen höheren Strom auslegt werden, bei welchem sie auslösen sollen, wodurch die Verluste im ordentlichen Betriebszustand sinken.

Gemäß einer vorteilhaften Ausgestaltung der Erfindung ist vorgesehen, dass der MOSFET drainseitig mit der Sicherung verbunden ist. Vorteilhaft ist hierbei, dass nachdem die Sicherung ausgelöst hat, die restlichen Phasen mit intakten MOSFETs wieder in Betrieb genommen werden können.

Gemäß einer weiteren vorteilhaften Ausgestaltung der Erfindung ist vorgesehen, dass der MOSFET sourceseitig mit der Sicherung verbunden ist. Vorteilhaft ist hierbei, dass nachdem die Sicherung ausgelöst hat, es weiterhin möglich ist, den defekten MOSFET mit einem Freibrennstrom zu versorgen. Dies geschieht dann vom Drain- zum Gate-Anschluss und ermöglicht, dass durch weitere Maßnahmen auch das Gate freigebrannt werden kann, um anschließend ein Notbetrieb mit allen Phasen zu ermöglichen.

In einer vorteilhaften Ausführungsform ist vorgesehen, dass die Schaltungsanordnung dazu eingerichtet ist, dass der MOSFET von einer Treiberschaltung über einen Vorwiderstand angesteuert wird, und dass eine Versorgungsspannung für die Treiberschaltung gegen einen Überstrom abgesichert ist. Vorteilhaft ist hierbei, dass bei einem defekten MOSFET lediglich die zu diesem MOSFET zugehörige Treiberschaltung zerstört werden kann, nicht aber die Treiberschaltungen der restlichen intakten Phasen.

In einer weiteren vorteilhaften Ausführungsform ist vorgesehen, dass eine Verbindung zwischen der Treiberschaltung und einer Regelungseinheit für die Treiberschaltung einen Längswiderstand aufweist, um die Regelungseinheit gegen einen Überstrom abzusichern. Vorteilhaft ist hierbei, dass bei einem defekten MOSFET die Regelungseinheit vor einer Zerstörung durch einen Überstrom aus der Treiberschaltung geschützt wird.

Eine vorteilhafte Ausführungsform sieht vor, dass die Schaltungsanordnung dazu eingerichtet ist, dass der MOSFET von einer Treiberschaltung über einen Vorwiderstand angesteuert wird, und dass zwischen der Treiberschaltung und dem Vorwiderstand eine Schutzschaltung angeordnet ist, wobei die Schutzschaltung eine Parallelschaltung aus einem ersten Widerstand und einem Kondensator aufweist. Vorteilhaft ist hierbei, dass durch die Schutzschaltung die Treiberschaltung der defekten Phase vor zu hohen Gleichströmen geschützt wird, welche ansonsten die Treiberschaltung zerstören könnten.

Eine weitere vorteilhafte Ausführungsform sieht vor, dass eine Stromableitschaltung zwischen einer Verbindung des Vorwiderstandes mit der Schutzschaltung und der Masse angeordnet ist, wobei die Stromableitschaltung einen Zusatzschalter aufweist, welcher über eine Regelungseinheit steuerbar ist. Vorteilhaft ist hierbei, dass über den Zusatzschalter der Strom vom kurzgeschlossenen Gate des defekten MOSFETs zur Masse hin abgeleitet werden kann. Dies überlastet sehr schnell den Vorwiderstand, wodurch dieser aufschmilzt und somit die Gate-Leitung abtrennt.

Gemäß einer vorteilhaften Ausgestaltung ist vorgesehen, dass die Stromableitschaltung je Schutzschaltung eine Diode aufweist, wobei die Diode zwischen der Verbindung des Vorwiderstandes mit der Schutzschaltung und dem Zusatzschalter angeordnet ist und wobei die Diode kathodenseitig mit dem Zusatzschalter verbunden ist. Vorteilhaft ist hierbei, dass nur ein einziger Zusatzschalter pro Phase notwendig ist, mit dem der Vorwiderstand des defekten MOSFETs freigebrannt werden kann. Außerdem muss pro Phase nur ein einziger Zusatzschalter von der Regelungseinheit angesteuert werden. Dies führt dazu, dass weniger Bauteile benötigt werden, was zum einen Kosten und zum anderen Platz einspart.

Gemäß einer weiteren vorteilhaften Ausgestaltung ist vorgesehen, dass zwischen dem Zusatzschalter und Masse ein zweiter Widerstand angeordnet ist. Vorteilhaft ist hierbei, dass der zweite Widerstand als Stromgegenkopplung dient und somit eine Konstantstromquelle darstellt, um das Gate mit einer definierten Leistung freibrennen zu können. Dies führt dazu, dass der Zusatzschalter gezielt für diese Leistung ausgelegt werden kann.

Die Erfindung betrifft außerdem ein Verfahren gemäß Anspruch 10 zum Betrieb einer Schaltungsanordnung.

Erfindungsgemäß werden dabei in einem außerordentlichen Betriebszustand die Verfahrensschritte:
- A: Erkennen eines Defekts eines Low-Side-MOSFETs oder eines Defektes eines High-Side-MOSFETs in einem Zweig einer Halbbrücke einer Phase,
- B: Stoppen der Ansteuerung aller MOSFETs,
- C: Öffnen des zweiten Schalters beim Defekt des Low-Side-MOSFET, oder Öffnen des ersten Schalters beim Defekt des High-Side-MOSFET,
- D: Ansteuern der MOSFETs der Phasen, in denen alle MOSFETs intakt sind, derart, dass ein ausreichend großer Strom in die defekte Phase fließt um die Sicherung auszulösen,
durchgeführt. Vorteilhaft ist hierbei, dass durch die genannte Abfolge der Verfahrensschritte eine Sicherung in einer Phase mit kurzgeschlossenem MOSFET gezielt freigebrannt werden kann. Zudem wird durch die Verfahrensschritte B und C der Spannungswandler außer Betrieb genommen und vor einem unkontrollierten Stromfluss geschützt, wodurch eine Zerstörung von Bauteilen vermieden werden kann.

Eine vorteilhafte Ausgestaltung des erfindungsgemäßen Verfahrens sieht vor, dass nach dem Verfahrensschritt D ein Verfahrensschritt E folgt, in welchem der geöffnete erste Schalter oder der geöffnete zweite Schalter geschlossen wird und in welchem die MOSFETs der Phasen, in denen alle MOSFETs intakt sind, angesteuert werden, wie dies in einem ordentlichen Betriebszustand der Fall ist. Vorteilhaft ist hierbei, dass der Spannungswandler mit mehreren parallel geschalteten Phasen in einem Notlauf betrieben werden kann, wobei die defekte Phase nicht mehr betrieben wird.

Eine vorteilhafte Ausgestaltung des erfindungsgemäßen Verfahrens sieht vor, dass nach dem Verfahrensschritt D ein Verfahrensschritt F folgt, in welchem der Zusatzschalter geschlossen wird. Vorteilhaft ist hierbei, dass durch das Schließen des Zusatzschalters, der Strom, der in den kurzgeschlossenen MOSFET fließt, über den Vorwiderstand des Gates des MOSFETs zur Masse hin abgeleitet wird. Hierdurch wird der Vorwiderstand des Gates überlastet und schmilzt auf. Der MOSFET ist somit mit zwei von drei Verbindungen von der Schaltungsanordnung getrennt.

Gemäß einer vorteilhaften Ausgestaltung des erfindungsgemäßen Verfahrens ist vorgesehen, dass nach dem Verfahrensschritt F ein Verfahrensschritt G folgt, in welchem der geöffnete erste Schalter oder der geöffnete zweite Schalter geschlossen wird und in welchem die MOSFETs aller Phasen angesteuert werden, wobei die Phase mit dem Defekt mit einer geringeren Leistung als im ordentlichen Betriebszustand betrieben wird und wobei die Phasen, in denen alle MOSFETs intakt sind, wie im ordentlichen Betriebszustand betrieben werden. Vorteilhaft ist hierbei, dass der Spannungswandler mit mehreren parallel geschalteten Phasen in einem Notlauf betrieben werden kann, wobei alle Phasen genutzt werden können.

### Zeichnungen

Fig. 1 zeigt ein erstes Ausführungsbeispiel einer erfindungsgemäßen Schaltungsanordnung.
Fig. 2 zeigt eine Phase des Spannungswandlers des ersten Ausführungsbeispiels nach Fig. 1.
Fig. 3 zeigt ein erstes Ausführungsbeispiel für ein erfindungsgemäßes Betriebsverfahren der erfindungsgemäßen Schaltungsanordnung.
Fig. 4 zeigt ein zweites Ausführungsbeispiel für ein erfindungsgemäßes Betriebsverfahren der erfindungsgemäßen Schaltungsanordnung.

### Beschreibung von Ausführungsbeispielen

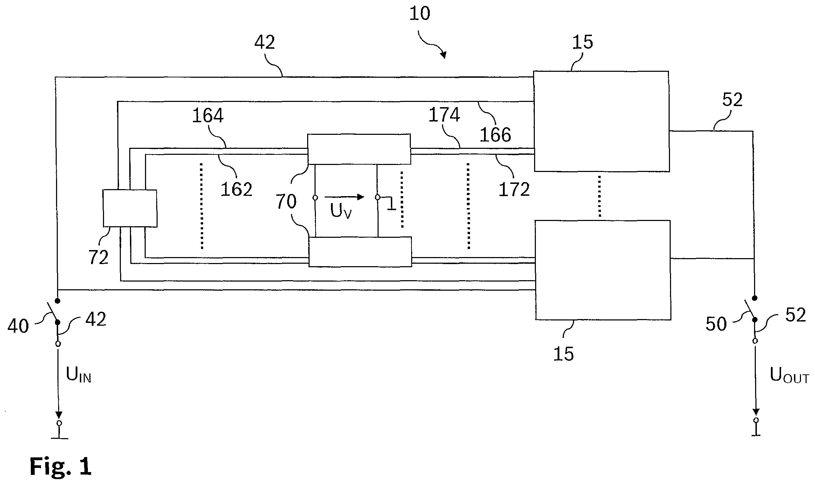

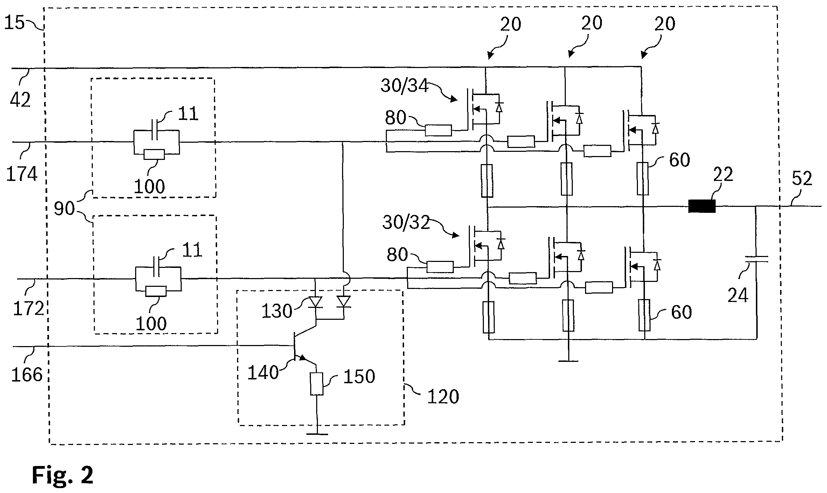

Fig. 1 zeigt ein erstes Ausführungsbeispiel einer erfindungsgemäßen Schaltungsanordnung. Dargestellt ist eine Schaltungsanordnung, welche eine Eingangsspannung U_{IN} und eine Ausgangsspannung U_{OUT} aufweist. Ein Spannungswandler 10 wandelt die Eingangsspannung U_{IN} mittels parallel geschalteter Phasen 15 in die Ausgangsspannung U_{OUT} um, wobei die Eingangsspannung U_{IN} über einen Eingangspfad 42 mit einem ersten Schalter 40 den Phasen 15 zu Verfügung gestellt wird und wobei die Ausgangsspannung U_{OUT} über einen Ausgangspfad 52 mit einem zweiten Schalten 50 von den Phasen 15 abgegriffen wird. Zudem weist die Schaltungsanordnung eine Regelungseinheit 72 sowie pro Phase 15 je eine Treiberschaltung 70 auf. Die Regelungseinheit 72 ist über Leitungen 162 und 164 mit Treiberschaltungen 70 und jeweils über eine Leitung 166 mit den Phasen 15 verbunden. Die Treiberschaltungen 70 sind wiederum über Leitungen 172 und 174 mit den Phasen 15 verbunden und werden durch eine Versorgungsspannung Uv versorgt. In einem ordentlichen Betriebszustand sind der erste Schalter 40 und der zweite Schalter 50 geschlossen. Die Regelungseinheit 72 sendet dann ein erstes und ein zweites pulsweitenmoduliertes Signal über die Leitungen 162 bzw. 164 an die Treiberschaltungen 70. Die pulsweitenmodulierten Signale verlaufen im Gegentakt zueinander, wobei das erste Signal in der Leitung 162 von der Treiberschaltung 70 so verarbeitet wird, um über die Leitung 172 Low-Side-MOSFETs 32 in den Phasen 15 nach Fig. 2 anzusteuern und wobei das Signal in der Leitung 164 von der Treiberschaltung 70 so verarbeitet wird, um über die Leitung 174 High-Side-MOSFETs 34 in den Phasen 15 nach Fig. 2 anzusteuern. Die Treiberschaltungen 70 werden von der Regelungseinheit 72 während eines Schaltzyklus zeitlich versetzt angesteuert.

In einem alternativen Ausführungsbeispiel, welches nicht bildlich dargestellt ist, ist die Versorgungsspannung U_{V} gegenüber einem Überstrom aus einer der Treiberschaltungen 70 abgesichert. Hierdurch kann vermieden werden, dass die Treiberschaltungen 70 aller Phasen 15 durch einen in eine Treiberschaltung 70 fließenden Überstrom in eine der Phasen 15 beschädigt werden. Alternativ hierzu kann die Versorgungsspannung auch schaltbar ausgestaltet sein. In einer weiteren Alternative ist ein Längswiderstand zwischen der Regelungseinheit 72 und der Treiberschaltung 70 angeordnet. Hierdurch kann die Regelungseinheit 72 vor einem Überstrom aus einer der Treiberschaltungen 70 geschützt werden. Bei diesen alternativen Ausführungsformen ist dann die Schutzschaltung 90 und die Stromableitschaltung 120, welche in Fig. 2 aufgezeigt sind nicht nötig. Man muss jedoch beachten, dass in diesen Fällen die Phase 15 mit dem defekten MOSFET 30 nicht mehr betrieben werden kann, da die Treiberschaltung 70 dieser Phase 15 voraussichtlich zerstört wird.

Fig. 2 zeigt eine Phase des Spannungswandlers des ersten Ausführungsbeispiels nach Fig. 1. Dargestellt ist eine Phase 15 mit drei parallel geschalteten Halbbrücken 20, die gemeinsam mit einer Spule 22 und einem Kondensator 24 einen Synchronwandler bilden. Die Zweige der Halbbrücken 20 weisen jeweils einen MOSFET 30 und drainseitig dazu jeweils eine Sicherung 60 auf. Die Spule 22 ist einerseits mit den Mittelabgriffen der Halbbrücken 20 und anderseits mit dem Ausgangspfad 52 verbunden. Zwischen dem Ausgangspfad 52 und Masse GND ist der Kondensator 24 angeordnet. Des Weiteren sind die Halbbrücken eingangsseitig mit dem Eingangspfad 42 verbunden. Bei den MOSFETs 30 wird zwischen Low-Side-MOSFETs 32 und High-Side-MOSFETs 34 unterschieden, wobei die Low-Side-MOSFETs 32 zwischen Mittelabgriff der Halbbrücken 20 und Masse GND angeordnet sind und die High-Side-MOSFETs 34 zwischen Mittelabgriff der Halbbrücken 20 und dem Eingangspfad 42 angeordnet sind. Die Gates der High-Side-MOSFETs 34 werden über die Leitung 174 agesteuert. Die Gates der Low-Side-MOSFETs werden über die Leitung 172 angesteuert. Dabei sind noch jeweils eine Schutzschaltung 90 bei den High-Side-MOSFETs 34 und eine Schutzschaltung 90 bei den Low-Side-MOSFETs sowie ein Vorwiderstand 80 je MOSFET 30 in den Leitungen 172 und 174 angeordnet. Die Schutzschaltung 90 ist eine Parallelschaltung eines ersten Widerstandes 100 mit einem Kondensator 110. Des Weiteren weist die Phase 15 eine Stromableitschaltung 120 auf, welche zwischen der Verbindung von den Vorwiderständen 80 mit der Schutzschaltung 90 und Masse GND angeordnet ist. Die Stromableitschaltung 120 weist einen Zusatzschalter 140, einen zweiten Widerstand 150 und pro Schutzschaltung 90 je eine Diode 130 auf. Dabei sind die Diode 130, der Zusatzschalter 140 und der zweite Widerstand 150 in Reihe geschaltet, wobei die Diode 130 jeweils kathodenseitig mit dem Zusatzschalter 140 verbunden ist und jeweils anodenseitig mit der Verbindung zwischen Schutzschaltung 90 und Vorwiderstand 80 verbunden ist und wobei der Zusatzschalter 140 über den zweiten Widerstand 150 mit der Masse GND verbunden ist. Der Zusatzschalter 140 wird über die Leitung 166 angesteuert.

In einem alternativen Ausführungsbeispiel, welches nicht bildlich dargestellt ist, sind die Sicherungen 60 in jedem Zweig der Halbbrücken 20 drainseitig mit den MOSFETs verbunden. Hierdurch muss bei einem defekten MOSFET nicht auch noch das Gate freigebrannt werden, um die Phasen 15 mit intakten MOSFETs 30 wieder in Betrieb nehmen zu können. In einem weiteren alternativen Ausführungsbeispiel ist kein zweiter Widerstand 150 in der Stromableitschaltung 120 angeordnet. Hierdurch entfällt die Stromgegenkopplung und somit muss der Zusatzschalter 140 ein Safe-FET, eine Kleinsignalendstufe oder ein einfacher MOSFET, welcher einen genügend großen Strom treiben kann, sein.

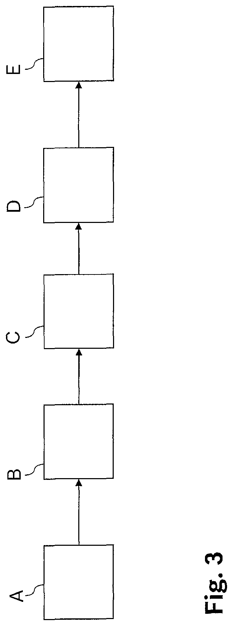

Fig. 3 zeigt ein erstes Ausführungsbeispiel für ein erfindungsgemäßes Betriebsverfahren der erfindungsgemäßen Schaltungsanordnung. So wird in einem Verfahrensschritt A erkannt, falls ein Low-Side-MOSFET 32 oder ein High-Side-MOSFET 34 einen Kurzschluss aufweisen. Sobald dies erkannt wird, wird in einem Verfahrensschritt B die Ansteuerung aller MOSFETs 30 gestoppt, um den Spannungswandler außer Betrieb zu nehmen. Anschließend wird in einem Verfahrensschritt C entweder der zweite Schalter 50 geöffnet, falls ein defekter Low-Side-MOSFET 32 erkannt wurde, oder aber es wird der erste Schalter 40 geöffnet, falls ein defekter High-Side-MOSFET 34 erkannt wurde. Dadurch wird ein unkontrollierter Stromfluss während eines nachfolgenden Verfahrensschrittes D vermieden. In dem Verfahrensschritt D werden die Phasen 15 mit intakten MOSFETs 30 so betrieben, dass ein ausreichend großer Strom in die Phase 15 mit dem Defekt fließt, um die Sicherung 60 auszulösen. Der ausreichend große Strom wird dabei durch ein Ansteuern der Phasen 15, in denen alle MOSFETs 30 intakt sind, mit einem geringen Tastgrad ermöglicht. Sobald die Sicherung 60 ausgelöst hat, welche im Zweig der Halbbrücke 20 mit dem MOSFET 30 mit dem Defekt angeordnet ist, wird ein Verfahrensschritt E durchgeführt. In diesem Verfahrensschritt E wird der erste Schalter 40 oder der zweite Schalter 50 geschlossen und anschließend werden die MOSFETs 30 der Phasen 15, in denen alle MOSFETs 30 intakt sind, angesteuert, wie dies im ordentlichen Betriebszustand der Fall ist. Hierdurch wird ein Notlauf der Schaltungsanordnung erzielt, wobei die Phase 15 mit dem defekten MOSFET 30 nicht wieder in Betrieb genommen wird.

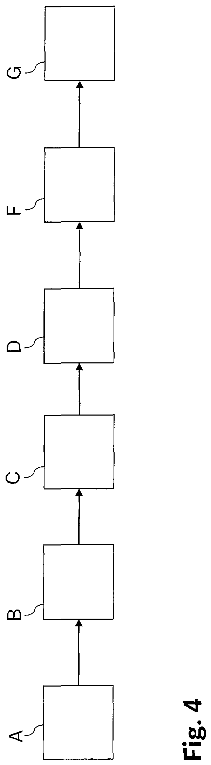

Fig. 4 zeigt ein zweites Ausführungsbeispiel für ein erfindungsgemäßes Betriebsverfahren der erfindungsgemäßen Schaltungsanordnung. Dargestellt sind Verfahrensschritte A bis G, welche nacheinander ablaufen. Hierbei sind die Verfahrensschritte A bis D identisch zu den gleichnamigen Verfahrensschritten aus Fig. 3. Anschließend zu Verfahrensschritt D, in dem die Sicherung 60 im Zweig der Halbbrücke 20 mit dem defekten MOSFET 30 ausgelöst hat, wird ein Verfahrensschritt F durchgeführt. In diesem Verfahrensschritt F wird der Zusatzschalter 140 geschlossen, welcher über die Leitung 166 von der Regelungseinheit 72 gesteuert wird. Dadurch fließt der in die Phase mit dem defekten MOSFET 32 fließende Strom nun über das Gate des defekten MOSFETs 30, dessen Vorwiderstand 80 und anschließend über den Zusatzschalter 140 in der Stromableitschaltung 120 zur Masse GND hin. Durch den Strom wird der Vorwiderstand 80 überlastet, schmilzt auf und trennt somit die Verbindung zwischen dem Gate des defekten MOSFETs 30 und der Treiberschaltung 70. Sobald dies geschehen ist, wird ein weitere Verfahrensschritt G durchgeführt. Dabei werden alle Phasen 15 angesteuert, also auch die Phase 15 mit dem MOSFET 30 mit dem Defekt. Die Ansteuerung der MOSFETs 30 erfolgt derart, dass die Phase 15 mit dem defekten MOSFET 30 mit einer geringeren Leistung als im ordentlichen Betriebszustand betrieben wird und die restlichen Phasen wie im ordentlichen Betriebszustand betrieben werden. Hierdurch kann die Schaltungsanordnung in einem Notlauf betrieben werden, welcher alle Phasen 15 nutzt.

In einem alternativen Ausführungsbeispiel, welches nicht bildlich dargestellt ist, kann nach dem Verfahrensschritt F aus Fig. 4 auch der Verfahrensschritt E aus Fig. 3 folgen. Hierdurch kann ein Notlauf ermöglicht werden, auch wenn die Treiberschaltung 70 der Phase 15 mit dem defekten MOSFET 30 nicht mehr funktionsfähig ist.

Eine Grundvoraussetzung für die Schaltungsanordnung und das zugehörige Verfahren zum Betrieb dieser Schaltungsanordnung ist, dass der Spannungswandler 10 mindestens drei Phasen 15 mit mindestens einer Halbbrücke 20 pro Phase 15 oder aber mindestens zwei Phasen 15 mit mindestens zwei Halbbrücken 20 pro Phase 15 aufweist. Dies ist nötig um einen ausreichend großen Freibrennfaktor zu erhalten, um die Sicherung 60 in dem Zweig der Halbbrücke 20 mit dem defekten MOSFET 30 auszulösen.

## Patentansprüche

1. Schaltungsanordnung mit einem Spannungswandler (10) mit einem Eingangspfad (42), welcher geeignet ist, dem Spannungswandler eine Eingangsspannung (U_{IN}) zur Verfügung zu stellen, und einem Ausgangspfad (52), welcher geeignet ist, vom Spannungswandler eine Ausgangsspannung (U_{OUT}) abzugreifen,
wobei der Spannungswandler (10) mindestens drei parallel geschaltete Phasen (15) mit mindestens je einer Halbbrücke (20) in Verbindung mit einer Spule (22) und einem Kondensator (24) oder mindestens zwei parallel geschaltete Phasen (15) mit mindestens je zwei Halbbrücken (20) in Verbindung mit einer Spule (22) und einem Kondensator (24) aufweist,
wobei in jedem Zweig der Halbbrücken (20) eine Sicherung (60)
und ein MOSFET (30) angeordnet ist,
**dadurch gekennzeichnet,**
**dass** die Schaltungsanordnung einen seriell im Eingangspfad (42) des Spannungswandlers (10) angeordneten ersten Schalter (40) und/oder einen seriell im Ausgangspfad (52) des Spannungswandlers (10) angeordneten zweiten Schalter (50) aufweist, und wobei die Schaltungsanordnung dazu eingerichtet ist, einen Defekt eines Low-Side-MOSFETs (32) oder einen Defekt eines High-Side-MOSFETs (34) in einem Zweig einer Halbbrücke (20) einer Phase (15) zu erkennen, und
die Ansteuerung aller MOSFETs (30) zu stoppen, und
den zweiten Schalter (50) beim Defekt eines der Low-Side-MOSFETs (32) zu öffnen, oder den ersten Schalter (40) beim Defekt eines der High-Side-MOSFETs (34) zu öffnen, und
die MOSFETs (30) der Phasen (15), in denen alle MOSFETs (30) intakt sind, derart anzusteuern, dass ein ausreichend großer Strom in die Phase (15) mit dem Defekt fließt, um die Sicherung (60) auszulösen.

2. Schaltungsanordnung nach Anspruch 1, **dadurch gekennzeichnet, dass** der MOSFET (30) drainseitig mit der Sicherung (60) verbunden ist.

3. Schaltungsanordnung nach Anspruch 1, **dadurch gekennzeichnet, dass** der MOSFET (30) sourceseitig mit der Sicherungen (60) verbunden ist.

4. Schaltungsanordnung nach einem der Ansprüche 1 bis 2, **dadurch gekennzeichnet, dass** die Schaltungsanordnung dazu eingerichtet ist, dass der MOSFET (30) von einer Treiberschaltung (70) über einen Vorwiderstand (80) angesteuert wird, und dass eine Versorgungsspannung für die Treiberschaltung (70) gegen einen Überstrom abgesichert ist.

5. Schaltungsanordnung nach Anspruch 4, **dadurch gekennzeichnet, dass** eine Verbindung zwischen der Treiberschaltung (70) und einer Regelungseinheit (72) für die Treiberschaltung (70) einen Längswiderstand (74) aufweist, um die Regelungseinheit (72) gegen einen Überstrom abzusichern.

6. Schaltungsanordnung nach Anspruch 3, **dadurch gekennzeichnet, dass** die Schaltungsanordnung dazu eingerichtet ist, dass der MOSFET (30) von einer Treiberschaltung (70) über einen Vorwiderstand (80) angesteuert wird, und dass zwischen der Treiberschaltung (70) und dem Vorwiderstand (80) eine Schutzschaltung (90) angeordnet ist, wobei die Schutzschaltung (90) eine Parallelschaltung aus einem ersten Widerstand (100) und einem Kondensator (110) aufweist.

7. Schaltungsanordnung nach Anspruch 6, **dadurch gekennzeichnet, dass** eine Stromableitschaltung (120) zwischen einer Verbindung des Vorwiderstandes (80) mit der Schutzschaltung (90) und der Masse (GND) angeordnet ist, wobei die Stromableitschaltung (120) einen Zusatzschalter (140) aufweist, welcher über einer Regelungseinheit (72) steuerbar ist.

8. Schaltungsanordnung nach Anspruch 7, **dadurch gekennzeichnet, dass** die Stromableitschaltung (120) je Schutzschaltung (90) eine Diode (130) aufweist, wobei die Diode (130) zwischen der Verbindung des Vorwiderstandes (80) mit der Schutzschaltung (90) und dem Zusatzschalter (140) angeordnet ist und wobei die Diode (130) kathodenseitig mit dem Zusatzschalter (140) verbunden ist.

9. Schaltungsanordnung nach Anspruch 8, **dadurch gekennzeichnet, dass** zwischen dem Zusatzschalter (140) und Masse (GND) ein zweiter Widerstand (150) angeordnet ist.

10. Verfahren zum Betrieb einer Schaltungsanordnung nach einem der Ansprüche 1 bis 9 in einem außerordentlichen Betriebszustand mit den Verfahrensschritten:
(A) Erkennen eines Defekts eines Low-Side-MOSFETs (32) oder eines Defektes eines High-Side-MOSFETs (34) in einem Zweig einer Halbbrücke (20) einer Phase (15),
(B) Stoppen der Ansteuerung aller MOSFETs (30),
(C) Öffnen des zweiten Schalters (50) beim Defekt des Low-Side-MOSFETs (32), oder Öffnen des ersten Schalters (40), beim Defekt des High-Side-MOSFETs (34),
(D) Ansteuern der MOSFETs (30) der Phasen (15), in denen alle MOSFETs (30) intakt sind, derart, dass ein ausreichend großer Strom in die Phase (15) mit dem Defekt fließt um die Sicherung (60) auszulösen.

11. Verfahren nach Anspruch 10, **dadurch gekennzeichnet, dass** nach dem Verfahrensschritt (D) ein Verfahrensschritt (E) folgt, in welchem der geöffnete erste Schalter (40) oder der geöffnete zweite Schalter (50) geschlossen wird und in welchem die MOSFETs (30) der Phasen (15), in denen alle MOSFETs (30) intakt sind, angesteuert werden, wie dies in einem ordentlichen Betriebszustand der Fall ist.

12. Verfahren nach Anspruch 10 zum Betrieb einer Schaltungsanordnung nach einem der Ansprüche 7 bis 9, **dadurch gekennzeichnet, dass** nach dem Verfahrensschritt (D) ein Verfahrensschritt (F) folgt, in welchem der Zusatzschalter (140) geschlossen wird.

13. Verfahren nach Anspruch 12, **dadurch gekennzeichnet, dass** nach dem Verfahrensschritt (F) ein Verfahrensschritt (G) folgt, in welchem der geöffnete erste Schalter (40) oder der geöffnete zweite Schalter (50) geschlossen wird und in welchem die MOSFETs (30) aller Phasen (15) angesteuert werden, wobei die Phase (15) mit dem Defekt mit einer geringeren Leistung als im ordentlichen Betriebszustand betrieben wird und wobei die Phasen (15), in denen alle MOSFETs (30) intakt sind, wie im ordentlichen Betriebszustand betrieben werden.

## Claims

1. Circuit arrangement having a voltage converter (10) having an input path (42) which is suitable for providing an input voltage (U_{IN}) to the voltage converter, an output path (52) which is suitable for tapping off an output voltage (U_{OUT}) from the voltage converter, wherein the voltage converter (10)
at least three phases (15) connected in parallel and each having at least one half-bridge (20) in connection with a coil (22) and a capacitor (24), or
having at least two phases (15) connected in parallel and each having at least two half-bridges (20) in connection with a coil (22) and a capacitor (24), wherein a fuse (60) and a MOSFET (30) are arranged in each branch of the half-bridges (20),
a. **characterized**
b. **in that** the circuit arrangement has a first switch (40) arranged in series in the input path (42) of the voltage converter (10) and/or a second switch (50) arranged in series in the output path (52) of the voltage converter (10), and wherein the circuit arrangement is configured
c. to identify a defect of a low-side MOSFET (32) or a defect of a high-side MOSFET (34) in a branch of a half-bridge (20) of a phase (15), and
d. to stop the actuation of all MOSFETs (30), and
e. to open the second switch (50) in the case of a defect of one of the low-side MOSFETs (32), or to open the first switch (40) in the case of a defect of one of the high-side MOSFETs (34), and
f. to actuate the MOSFETs (30) of the phases (15) in which all MOSFETs (30) are intact in such a way that a sufficiently large current flows into the phase (15) with the defect in order to trip the fuse (60).

2. Circuit arrangement according to Claim 1, **characterized in that** the MOSFET (30) is connected to the fuse (60) on the drain side.

3. Circuit arrangement according to Claim 1, **characterized in that** the MOSFET (30) is connected to the fuse (60) on the source side.

4. Circuit arrangement according to either of Claims 1 and 2, **characterized in that** the circuit arrangement is configured such that the MOSFET (30) is actuated by a driver circuit (70) by way of a series resistor (80), and that a supply voltage for the driver circuit (70) is protected against an overcurrent.

5. Circuit arrangement according to Claim 4, **characterized in that** a connection between the driver circuit (70) and a regulation unit (72) for the driver circuit (70) has a series-path resistor (74) to protect the regulation unit (72) against an overcurrent.

6. Circuit arrangement according to Claim 3, **characterized in that** the circuit arrangement is configured such that the MOSFET (30) is actuated by a driver circuit (70) by way of a series resistor (80), and that a protective circuit (90) is arranged between the driver circuit (70) and the series resistor (80), wherein the protective circuit (90) has a parallel circuit of a first resistor (100) and a capacitor (110).

7. Circuit arrangement according to Claim 6, **characterized in that** a current collector circuit (120) is arranged between a connection of the series resistor (80) to the protective circuit (90) and earth (GND), wherein the current collector circuit (120) has an additional switch (140) which can be controlled by way of a regulation unit (72).

8. Circuit arrangement according to Claim 7, **characterized in that** the current collector circuit (120) has one diode (130) per protective circuit (90), wherein the diode (130) is arranged between the connection of the series resistor (80) to the protective circuit (90) and the additional switch (140), and wherein the diode (130) is connected to the additional switch (140) on the cathode side.

9. Circuit arrangement according to Claim 8, **characterized in that** a second resistor (150) is arranged between the additional switch (140) and earth (GND).

10. Method for operating a circuit arrangement according to one of Claims 1 to 9 in an extraordinary operating state, having the method steps:
(A) identifying a defect of a low-side MOSFET (32) or a defect of a high-side MOSFET (34) in a branch of a half-bridge (20) of a phase (15),
(B) stopping the actuation of all MOSFETs (30),
b. (C) opening the second switch (50) in the case of a defect of the low-side MOSFET (32), or opening the first switch (40) in the case of a defect of the high-side MOSFET (34),
c. (D) actuating the MOSFETs (30) of the phases (15) in which all MOSFETs (30) are intact in such a way that a sufficiently large current flows into the phase (15) with the defect in order to trip the fuse (60).

11. Method according to Claim 10, **characterized in that** the method step (D) is followed by a method step (E) in which the open first switch (40) or the open second switch (50) is closed and in which the MOSFETs (30) of the phases (15) in which all MOSFETs (30) are intact are actuated, as is the case in an ordinary operating state.

12. Method according to Claim 10 for operating a circuit arrangement according to one of Claims 7 to 9, **characterized in that** the method step (D) is followed by a method step (F) in which the additional switch (140) is closed.

13. Method according to Claim 12, **characterized in that** the method step (F) is followed by a method step (G) in which the open first switch (40) or the open second switch (50) is closed and in which the MOSFETs (30) of all phases (15) are actuated, wherein the phase (15) with the defect is operated at a lower power than in the ordinary operating state, and wherein the phases (15) in which all MOSFETs (30) are intact are operated as in the ordinary operating state.

## Revendications

1. Agencement de circuit, comprenant un convertisseur de tension (10) doté d'un trajet d'entrée (42) qui est adapté pour fournir une tension d'entrée (U_{IN}) au convertisseur de tension, d'un trajet de sortie (52) qui est adapté pour prélever une tension de sortie (U_{OUT}) sur le convertisseur de tension, le convertisseur de tension (10)
au moins trois phases (15) connectées en parallèle avec au moins respectivement un demi-pont (20) en liaison avec une bobine (22) et un condensateur (24), ou
comprenant au moins deux phases (15) connectées en parallèle avec au moins respectivement deux demi-ponts (20) en liaison avec une bobine (22) et un condensateur (24),
un fusible (60) et un MOSFET (30) étant disposés dans chaque branche des demi-ponts (20),
a. **caractérisé**
b. **en ce que** l'agencement de circuit présente un premier commutateur (40) disposé en série sur le trajet d'entrée (42) du convertisseur de tension (10), et/ou un deuxième commutateur (50) disposé en série sur le trajet de sortie (52) du convertisseur de tension (10), et l'agencement de circuit étant aménagé pour
c. identifier un défaut d'un MOSFET côté bas (32) ou un défaut d'un MOSFET côté haut (34) dans une branche d'un demi-pont (20) d'une phase (15), et
d. arrêter le pilotage de tous les MOSFET (30), et
e. ouvrir le deuxième commutateur (50) en cas de défaut d'un des MOSFET côté bas (32), ou ouvrir le premier commutateur (40) en cas de défaut d'un des MOSFET côté haut (34), et
f. piloter les MOSFET (30) des phases (15) dans lesquelles tous les MOSFET (30) sont intacts de telle sorte que dans la phase (15) présentant le défaut circule un courant suffisamment fort pour déclencher le fusible (60).

2. Agencement de circuit selon la revendication 1, **caractérisé en ce que** le MOSFET (30) est relié au fusible (60) côté drain.

3. Agencement de circuit selon la revendication 1, **caractérisé en ce que** le MOSFET (30) est relié au fusible (60) côté source.

4. Agencement de circuit selon l'une quelconque des revendications 1 à 2, **caractérisé en ce que** l'agencement de circuit est aménagé pour que le MOSFET (30) soit piloté par un circuit d'excitation (70) par l'intermédiaire d'une résistance série (80), et pour qu'une tension d'alimentation pour le circuit d'excitation (70) soit protégée contre une surintensité.

5. Agencement de circuit selon la revendication 4, **caractérisé en ce qu'**une liaison entre le circuit d'excitation (70) et une unité de régulation (72) présente une résistance en série (74) pour le circuit d'excitation (70) afin de protéger l'unité de régulation (72) contre une surintensité.

6. Agencement de circuit selon la revendication 3, **caractérisé en ce que** l'agencement de circuit est aménagé pour que le MOSFET (30) soit piloté par un circuit d'excitation (70) par l'intermédiaire d'une résistance série (80), et pour qu'un circuit de protection (90) soit disposé entre le circuit d'excitation (70) et la résistance série (80), le circuit de protection (90) présentant un circuit parallèle composé d'une première résistance (100) et d'un condensateur (110).

7. Agencement de circuit selon la revendication 6, **caractérisé en ce qu'**un circuit de dérivation de courant (120) est disposé entre une liaison de la résistance série (80) avec le circuit de protection (90) et la terre (GND), le circuit de dérivation de courant (120) présentant un commutateur supplémentaire (140) qui peut être commandé par l'intermédiaire d'une unité de régulation (72).

8. Agencement de circuit selon la revendication 7, **caractérisé en ce que** le circuit de dérivation de courant (120) présente une diode (130) pour chaque circuit de protection (90), la diode (130) étant disposée entre la liaison de la résistance série (80) avec le circuit de protection (90) et le commutateur supplémentaire (140), et la diode (130) étant reliée au commutateur supplémentaire (140) côté cathode.

9. Agencement de circuit selon la revendication 8, **caractérisé en ce qu'**une deuxième résistance (150) est disposée entre le commutateur supplémentaire (140) et la terre (GND).

10. Procédé permettant de faire fonctionner un agencement de circuit selon l'une quelconque des revendications 1 à 9 dans un état de fonctionnement extraordinaire, comprenant les étapes de procédé consistant à :
(A) identifier un défaut d'un MOSFET côté bas (32) ou un défaut d'un MOSFET côté haut (34) dans une branche d'un demi-pont (20) d'une phase (15),
(B) arrêter le pilotage de tous les MOSFET (30),
b. (C) ouvrir le deuxième circuit (50) en cas de défaut du MOSFET côté bas (32), ou ouvrir le premier commutateur (40) en cas de défaut du MOSFET côté haut (34),
c. (D) piloter les MOSFET (30) des phases (15) dans lesquelles tous les MOSFET (30) sont intacts de sorte que dans la phase (15) ayant le défaut circule un courant suffisamment fort pour déclencher le fusible (60).

11. Procédé selon la revendication 10, **caractérisé en ce que** l'étape de procédé (D) est suivie d'une étape de procédé (E) dans laquelle le premier commutateur ouvert (40) ou le deuxième commutateur ouvert (50) est fermé et dans laquelle les MOSFET (30) des phases (15) dans lesquelles tous les MOSFET (30) sont intacts sont pilotés comme dans un état de fonctionnement ordinaire.

12. Procédé selon la revendication 10 permettant de faire fonctionner un agencement de circuit selon l'une quelconque des revendications 7 à 9, **caractérisé en ce que** l'étape de procédé (D) est suivie d'une étape de procédé (F) dans laquelle le commutateur supplémentaire (140) est fermé.

13. Procédé selon la revendication 12, **caractérisé en ce que** l'étape de procédé (F) est suivie d'une étape de procédé (G) dans laquelle le premier commutateur ouvert (40) ou le deuxième commutateur ouvert (50) est fermé, et dans laquelle les MOSFET (30) de toutes les phases (15) sont pilotés, dans lequel la phase (15) ayant le défaut fonctionne avec une puissance inférieure à celle de l'état de fonctionnement ordinaire, et les phases (15) dans lesquelles tous les MOSFET (30) sont intacts fonctionnent comme à l'état de fonctionnement ordinaire.
